# EUROPÄISCHE PATENTSCHRIFT

(11) **EP 0 879 080 B1**
(45) Veröffentlichungstag und Bekanntmachung des Hinweises auf die Patenterteilung: **15.09.1999**
(21) Anmeldenummer: 97917992.6
(22) Anmeldetag: 05.02.1997
(51) Int. Cl.: B01D 35/153, B01D 35/16

(54) **FILTERABLAUF MIT FEDERVERSCHLUSS**
FILTER RUN-OFF WITH SPRING SEAL
EVACUATION DE FILTRE A OBTURATEUR A RESSORT

(30) Priorität: 10.02.1996 DE 29602330 U
(43) Veröffentlichungstag der Anmeldung: 25.11.1998
(73) Patentinhaber: Ing. Walter Hengst GmbH & Co. KG, 48147 Münster (DE)
(72) Erfinder: SCHUMANN, Heiko, D-48145 Münster (DE); WIEMEYER, Gerhard, D-48308 Senden (DE)
(74) Vertreter: Habbel, Ludwig (Lutz)
(86) Internationale Anmeldenummer: DE9700215
(87) Internationale Veröffentlichungsnummer: WO9728880

(56) Entgegenhaltungen:
- DE-A- 3 017 003
- DE-A- 3 344 568
- DE-A- 3 933 794
- US-A- 3 317 046
- US-A- 4 354 931

## Beschreibung

Die Erfindung betrifft einen Fluidfilter nach dem Oberbegriff des Anspruches 1.

Ein derartiger Fluidfilter ist aus der DE-A-33 44 568 bekannt. Das Verschlußelement ist als etwa pilzförmiges Ventil ausgestaltet. Eine erste, längliche Feder wirkt auf den Ventilschaft ein, so daß der Ventilkopf eine Ablauföffnung abdichtet. Beim Wechsel des Filtereinsatzes gibt die längliche Feder den Ventilschaft frei, so daß der Ventilkopf die Ablauföffnung öffnet. Diese Öffnung wird durch eine zweite, wendelförmige Feder begünstigt, die den Ventilkopf in seine Offenstellung drängt.

Die Ventilanordnung ist vergleichsweise aufwendig, da sie zwei Federn erfordert, und da zudem die Wendelfeder mit dem Ventilkopf und einem am Ventilschaft vorgesehenen umlaufenden Bund in einem weiteren Bauteil, einem sogenannten Zwischengehäuse, angeordnet sind.

Aus der US-A-3,317,046 ist ein Fluidfilter bekannt, bei dem mehrere im wesentlichen geradlinige Blattfedern als Filterumgehungsventile vorgesehen sind, deren Öffnungs- bzw. Schließverhalten wie bei einem Rückschlagventil durch die Strömungs- und Druckverhältnisse bestimmt wird.

Aus der DE-B-1 611 121 ist eine Membranfeder bekannt, die als ringförmiges Federelement ausgestaltet ist.

Die EP-A-322 828 A1 Zeigt als federnde Elemente eine ringförmige Gummischeibe sowie eine wendelförmige bzw. schraubenförmige Feder.

Auch die EP-A-213 889 zeigt ein Ablaufventil mit einer Schraubenfeder.

Die Filtereinsätze können unterschiedliche Abmessungen aufweisen, z. B. durch Fertigungstoleranzen, insbesondere aber dadurch, daß Einsatzstoffe Verwendung finden, die sich während der Betriebsdauer des Filtereinsatzes verändern, z. B. in Form einer Vielzahl von Papier- oder Pappscheiben, die sich nach Erweichung durch das zu filternde Medium setzen und so die Baulänge des Filtereinsatzes verkürzen.

Insbesondere bei derartigen Filtereinsätzen mit veränderlichen Abmessungen besteht das Problem, während des Betriebes eine zuverlässige Abdichtung der Ablauföffnung sicherzustellen und bei der Auswechslung des Filtereinsatzes eine automatische Öffnung der im Filtergehäuse vorgesehenen Ablauföffnung zu ermöglichen.

Der Erfindung liegt die Aufgabe zugrunde, einen gattungsgemäßen Fluidfilter dahingehend zu verbessern, daß bei möglichst niedrigen Herstellungskosten eine Längenanpassung an die sich verändernden Abmessungen des Filtereinsatzes über einen möglichst großen Bereich erzielbar ist.

Diese der Erfindung zugrundeliegende Aufgabe wird durch einen Fluidfilter mit den Merkmalen des Anspruches 1 gelöst.

Die Erfindung schlägt mit anderen Worten vor, eine u-förmig gebogene Stabfeder oder Blattfeder als Federelement vorzusehen, welches durch seine Federelastizität einen Ausgleich für die Veränderung der Abmessungen des Filtereinsatzes schafft und auf diese Weise auch bei sich verändernden Abmessungen des Filtereinsatzes eine stets zuverlässige Abdichtung der Ablauföffnung ermöglicht. Der Ventilkörper des Ablaufventiles kann sehr kostengünstig durch ein Plättchen gebildet werden.

Kostengünstig kann ein derartiges Verschlußelement eine Blattfeder umfassen, da die Breite der Blattfeder an die Größe der Ablauföffnung so angepaßt sein kann, daß zusätzliche Ventilplatten od. dgl. entfallen können.

Eine einfache, werkzeuglose und kostengünstige Befestigung eines derartigen Verschlußelementes kann dadurch erfolgen, daß die Feder selbstklemmend in einer entsprechenden Halterung des Filtergehäuses angeordnet wird.

Die Abdichtung der Ablauföffnung kann auf unterschiedliche Weise erfolgen:
Entweder kann eine elastische Dichtung am Verschlußelement vorgesehen sein, die entweder vollflächig über die Ablauföffnung gelegt wird oder die die Ablauföffnung kragenartig umgibt.

Alternativ dazu kann am Verschlußelement ein kragenartiger Vorsprung vorgesehen sein, der entweder ebenfalls aus einem elastischen Werkstoff besteht oder aus einem Werkstoff, der härter ist als das Filtergehäuse, wobei dieser Dichtungskragen am Verschlußelement in Art einer Schneide ausgebildet sein kann, der in den Werkstoff des Filtergehäuses abdichtend eindringt.

Eine weitere Alternative kann einen am Filtergehäuse angeformten bzw. befestigten Dichtungskragen umfassen, der entweder aus dem Filtergehäusewerkstoff besteht und durch entsprechend geringe Wandstärke eine Elastizität aufweist, die im Zusammenspiel mit dem Verschlußelement eine abdichtende Wirkung ermöglicht, oder dieser im Filtergehäuse selbst vorgesehene Dichtungskragen kann aus einem vom Filtergehäusewerkstoff unterschiedlichen Werkstoff gebildet sein, der die gewünschten elastischen Eigenschaften zum abdichtenden Zusammenwirken mit dem Verschlußelement ermöglicht.

Von den genannten Alternativen ermöglichen diejenigen, bei` denen das Dichtungselement am Verschlußelement vorgesehen ist, einen Austausch des Verschlußelementes mitsamt dem Dichtungselement, so daß bei ggf. auftretenden Undichtigkeiten eine einfache, schnelle und kostengünstige Reparatur möglich ist.

Die Ablauföffnung ist vorteilhaft im Bereich des Filtertiefsten vorgesehen, um eine möglichst vollständige Entleerung des Filtergehäuses zu ermöglichen. Das Filtertiefste bestimmt sich dabei nach der Bauform des Filtergehäuses und nach dessen vorgesehener Einbaulage. Der in Frage kommende Bereich des Filtertiefsten wird dadurch bestimmt, daß dieser unterhalb des Filtereinsatzes angeordnet ist, so daß bei einer Freigabe der Ablauföffnung sichergestellt ist, daß das zu filternde Fluid vollständig vom Filtereinsatz ablaufen kann, unabhängig von ggf. im Filtergehäuse verbleibenden Restmengen.

Dabei können die Ablauföffnungen entweder koaxial zu dem Filtereinsatz angeordnet sein, beispielsweise im Boden des Filtergehäuses, oder sie können radial angeordnet sein, also in der Wandung des Filtergehäuses. Bei einer derartig radialen Anordnung kann vorteilhaft eine sich koaxial zum Filtereinsatz erstreckende Feder vorgesehen sein, die im unbelasteten Zustand im Abstand von der Wandung des Filtergehäuses verläuft. Beim Einsetzen des Filtereinsatzes wird eine derartige Blatt-feder vom Filtereinsatz nach außen gedrückt, so daß sie der Ablauföffnung abdichtend anliegt. Eine abdichtende Beaufschlagung einer derartig angeordneten Blattfeder ist auch bei sehr großer Längenänderung des Filtereinsatzes sichergestellt.

Bei einer Anordnung der Ablauföffnung koaxial zum Filtereinsatz, also beispielsweise im Filtergehäuseboden, ist beispielsweise mit einer im wesentlichen U-förmig verlaufenden Blattfeder möglich, bei der ein Schenkel die Abdichtung der Ablauföffnung übernimmt, während der andere Schenkel federbeweglich die Längenänderung des Filtereinsatzes kompensieren kann.

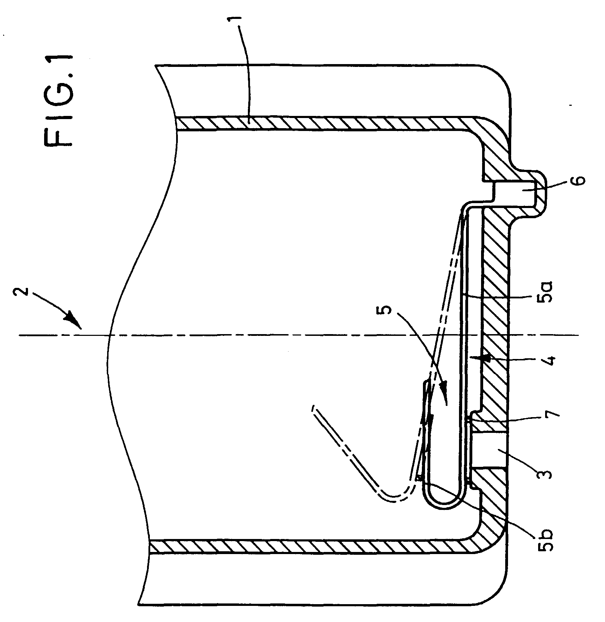

Ein Ausführungsbeispiel der Erfindung wird anhand der Zeichnung im folgenden näher erläutert.

In der Zeichnung ist mit 1 ein Filtergehäuse bezeichnet, dessen Längsachse bei 2 angedeutet ist, wobei diese Längsachse 2 auch die Längsachse des in das Filtergehäuse 1 einsetzbaren Filtereinsatzes darstellt. Im Boden des Filtergehäuses 1 ist eine Ablauföffnung 3 vorgesehen, die mit Hilfe eines Verschlußelementes 4 verschlossen ist: Das Verschlußelement 4 umfaßt eine im wesentlichen U-förmig verlaufende Blattfeder 5 mit einem längeren Schenkel 5a und einem kürzeren Schenkel 5b. Am Ende des längeren Schenkels 5a ist ein Fuß 6 der Blattfeder 5 angeformt, wobei das Filtergehäuse 1 eine Ausnehmung zur selbstklemmenden Halterung dieses Fußes 6 aufweist.

Der längere Schenkel 5a weist weiterhin einen elastischen Dichtungskragen 7 auf, der beispielsweise aus einem auf den Schenkel 5a aufgeklebten oder aufvulkanisierten Elastomerring bestehen kann.

Mit durchgezogenen Strichen ist die abdichtende Stellung des Verschlußelementes 4 dargestellt. Demgegenüber zeigt die gestrichelt dargestellte Anordnung das Verschlußelement 4 in seiner unbelasteten Stellung, beispielsweise nachdem der Filtereinsatz aus dem Filtergehäuse 1 entnommen wurde. Die unterschiedliche Länge der beiden Schenke 5a und 5b stellt unterschiedliche Federungseigenschatten dieser beiden Schenke 5a und 5b sicher, so daß bei einer reduzierten Länge des Filtereinsatzes sich zunächst der Schenke 5b vom Schenkel 5a entfernt, während der längere Schenkel 5a seine abdichtende Stellung an der Abschlußöffnung 3 beibehält.

Die unterschiedlichen Federungseigenschaften der beiden Schenke) einer Blattfeder können zusätzlich oder alternativ zu einer unterschiedlichen Längenausbildung dieser beiden Schenkel dadurch beeinflußt werden, daß die Querschnittsgeometrie durch Stauchungen, Einschnürungen oder durch die Ausbildung von Sicken zu einer gewünschten weicheren oder steiferen Federcharakteristik führt, so daß in Anpassung an die baulichen Gegebenheiten und die vorhandenen Platzverhältnisse auch bei einer Blattfeder mit zwei gleichlangen SchenkeIn unterschiedliche Federhärten realisiert werden können.

In Abwandlung des dargestellten Ausführungsbeispiels kann anstelle der Blattfeder auch ein Federstahldraht Verwendung finden. Bei einer derartigen Ausgestaltung des Federelementes ist zur zuverlässigen Abdichtung der Ablauföffnung ein zusätzlicher Ventilkörper erforderlich, der beispielsweise durch eine Platte, einen Konus, ein Kugelsegment od. dgl., ggf. aus elastischem Werkstoff, gebildet sein kann. Durch Ausgestaltung eines Fußes, vergleichbar mit dem dargestellten Fuß 6, könnte ein derartiges Federelement aus Federstahldraht verdrehsicher gelagert sein, so daß eine zuverlässige Anlage des Ventilkörpers an der Ablauföffnung sichergestellt wäre.

Ein Vorteil der vorgeschlagenen Ventilanordnung besteht in ihrer 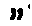 selbsthelfenden" Funktion: Je größer der Druckunterschied zwischen den durch das Ventil getrennten Bereichen wird, desto fester schließt das Ventil. Dies bedeutet, daß auch bei hohen Innendrücken im Fluidfilter das Unterwandern der Dichtfläche und damit eine Leckage des Verschlusses der Ablauföffnung vermieden wird. Insbesondere bei der Verwendung von Elastomeren als Dichtelemente des Verschlusses, führt dieser Selbsthilfeeffekt zu einer zuverlässigen Dichtigkeit des Verschlusses unter sämtlichen im Betrieb auftretenden Bedingungen.

Abweichend von der Befestigungsmöglichkeit der Blattfeder durch deren klemmende Festlegung im Filtergehäuse kann eine Vielzahl von Befestigungsmöglichkeiten für derartige Federn vorgesehen sein. Eine besonders preisgünstige Alternative zu der dargestellten Verklemmung kann in einer sogenannten Verstemmung bestehen: Das Filtergehäuse kann vorstehende Bereiche aufweisen, z. B. in Form eines kleinen zylinderförmigen Stutzens, wobei die Blattfeder in ihrem Fußbereich eine entsprechend große Öffnung aufweist. Die Blattfeder kann am Stutzen festgelegt werden und der Stutzen anschließend nietenartig verpreßt werden, wobei die Anordnung mehrerer derartiger Stutzen eine verdrehsichere Festlegung der Feder ermöglicht. Der Vorteil bei einer derartigen Befestigung liegt darin, daß Bearbeitungsschritte der Blattfeder eingespart werden können, die bei der klemmenden Festlegung der Blattfeder in deren Fußbereich erforderlich sind.

## Patentansprüche

1. Fluidfilter für flüssige Medien mit einem entfernbaren Filtereinsatz, mit einer Ablauföffnung (3), wobei der Ablauföffnung (3) ein federbelastetes Verschlußelement (4) zugeordnet ist, welches von dem Filtereinsatz gegen die Federwirkung in einer die Ablauföffnung (3) verschließenden Verschlußstellung gehalten ist, und welches bei gelockertem oder entferntem Filtereinsatz die Ablauföffnung (3) freigibt, wobei die Feder als längliches Federelement ausgebildet ist, dadurch gekennzeichnet, daß die Feder (5) im wesentlichen u-förmig mit zwei Schenkeln (5a, 5b) ausgestaltet ist, wobei der eine Schenke! (5a) zur Abdichtung der Ablauföffnung (3) und der andere Schenke) (5b) zur Druckbeaufschlagung durch den Filtereinsatz angeordnet ist.

2. Fluidfilter nach Anspruch 1, dadurch gekennzeichnet, daß das Verschlußelement (4) eine Blattfeder (5) umfaßt.

3. Fluidfilter nach Anspruch 1 oder 2, dadurch gekennzeichnet daß das Verschlußelement (4) eine Dichtung (7) aus einem Elastomerwerkstoff umfaßt.

4. Fluidfilter nach einem der vorhergehenden Ansprüche dadurch gekennzeichnet, daß um die Ablauföffnung (3) ein elastischer Dichtkragen verläuft, dem das Verschlußelement (4) in seiner Verschlußstellung abdichtend anliegt.

5. Fluidfilter nach einem der vorhergehenden Ansprüche, gekennzeichnet durch eine Ausnehmung im Filtergehäuse (1) zur selbstklemmenden Halterung des Fußes (6) der Feder (5).

6. Fluidfilter nach einem der Ansprüche 1 bis 4, dadurch gekennzeichnet, daß der Fuß der Feder mit dem Filtergehäuse verstemmt ist.

7. Fluidfilter nach einem der vorhergehenden Ansprüche, gekennzeichnet durch eine zur Achse (2) des Filtereinsatzes koaxiale Anordnung der Ablauföffnung (3), wobei die Feder (5) im wesentlichen radial verläuft.

8. Fluidfilter nach Anspruch 2, dadurch gekennzeichnet, daß die beiden Schenkel (5a, 5b) der Blattfeder (5) unterschiedliche Federcharakteristiken aufweisen.

9. Fluidfilter nach Anspruch 2, dadurch gekennzeichnet, daß die Querschnittsgeometrie der beiden Schenkel (5a, 5b) der Blattfeder (5) mittels Stauchungen, Einschnürungen oder Sicken zur Erzielung einer bestimmten Federcharakteristik gestaltet ist.

## Claims

1. A fluid filter for liquid media comprising a removable filter cartridge and a discharge opening (3), with which discharge opening (3) there is associated a spring-loaded closing member (4) which is held by the filter cartridge against the action of the spring in a closed position closing the discharge opening (3) and which releases the discharge opening (3) when the filter cartridge is loosened or removed, the spring taking the form of an elongate spring member, characterised in that the spring (5) is of substantially U-shaped construction, with two legs (5a, 5b), one (5a) of the legs being arranged so as to seal the discharge opening (3) and the other leg (5b) being arranged such that pressure may be exerted on it by the filter cartridge.

2. A fluid filter according to claim 1, characterised in that the closing member (4) comprises a leaf spring (5).

3. A fluid filter according to claim 1 or claim 2, characterised in that the closing member (4) comprises a seal (7) of an elastomeric material.

4. A fluid filter according to any one of the preceding claims, characterised in that a resilient sealing collar extends around the discharge opening (3), the closing member (4) lying sealingly against said sealing collar in its closed position.

5. A fluid filter according to any one of the preceding claims, characerised by a recess in the filter housing (1) for self-clamping mounting of the foot (6) of the spring (5).

6. A fluid filter according to any one of claims 1 to 4, characterised in that the foot of the spring is mortised together with the filter housing.

7. A fluid filter according to any one of the preceding claims, characterized by a coaxial arrangement of the discharge opening (3) with respect to the axis (2) of the filter cartridge, the spring (5) extending substantially radially.

8. A fluid filter according to claim 2, characterized in that the two legs (5a, 5b) of the leaf spring (5) exhibit different spring characteristics.

9. A fluid filter according to claim 2, characterized in that the cross-sectional geometry of the two legs (5a, 5b) of the leaf spring (5) is shaped by means of compression, constriction or crimping to achieve a particular spring characteristic.

## Revendications

1. Filtre à fluide pour substances liquides comportant un insert filtrant amovible, avec une ouverture d'écoulement (3) qui est associée à un obturateur (4) chargé par ressort qui est maintenu par l'insert filtrant, contre l'action du ressort, dans la position d'obturation fermant l'ouverture d'écoulement (3), et qui libère l'ouverture d'écoulement (3) lorsque l'insert filtrant est desserré ou retiré, le ressort étant conçu comme un élément élastique allongé, caractérisé en ce que le ressort (5) est conçu sensiblement en forme de U avec deux bras (5a, 5b), l'un des bras (5a) servant à l'obturation de l'ouverture d'écoulement (3) et l'autre bras (5b) à l'application de pression par l'insert filtrant.

2. Filtre à fluide selon la revendication 1, caractérisé en ce que l'obturateur (4) comprend un ressort à lames (5).

3. Filtre à fluide selon la revendication 1 ou 2, caractérisé en ce que l'obturateur (4) possède un joint (7) fait d'un matériau élastomère.

4. Filtre à fluide selon l'une ou l'ensemble des revendications précédentes, caractérisé en ce que l'ouverture d'écoulement (3) est entourée d'un collet d'étanchéité élastique sur lequel l'obturateur (4) repose de manière étanche dans sa position d'obturation.

5. Filtre à fluide selon l'une ou l'ensemble des revendications précédentes, caractérisé en ce qu'il comporte un évidement dans le logement de filtre (1) en vue de la fixation autobloquante du pied (6) du ressort (5).

6. Filtre à fluide selon l'une ou l'ensemble des revendications 1 à 4, caractérisé en ce que le pied du ressort est rabattu sur le logement du filtre.

7. Filtre à fluide selon l'une ou l'ensemble des revendications précédentes, caractérisé en ce que l'ouverture d'écoulement (3) est disposée de manière coaxiale par rapport à l'axe (2) de l'insert filtrant, le ressort (5) étant sensiblement radial.

8. Filtre à fluide selon la revendication 2, caractérisé en ce que les deux bras (5a, 5b) du ressort à lames (5) présentent des caractéristiques d'élasticité différentes.

9. Filtre à fluide selon la revendication 2, caractérisé en ce que la géométrie de la section des deux bras (5a, 5b) du ressort à lames (5) est conformée au moyen d'écrasements, de strictions ou de gouttières de manière à obtenir une caractéristique d'élasticité précise.
